(19) **Europäisches Patentamt**
**European Patent Office**
**Office européen des brevets**

(11) **EP 2 057 726 B1**

(12) **EUROPÄISCHE PATENTSCHRIFT**

(45) Veröffentlichungstag und Bekanntmachung des Hinweises auf die Patenterteilung:
**21.03.2012 Patentblatt 2012/12**

(21) Anmeldenummer: **06791354.1**

(22) Anmeldetag: **31.08.2006**

(51) Int Cl.:
***H02H 3/28*** *(2006.01)*

(86) Internationale Anmeldenummer:
**PCT/DE2006/001554**

(87) Internationale Veröffentlichungsnummer:
**WO 2008/025309 (06.03.2008 Gazette 2008/10)**

(54) **DIFFERENTIALSCHUTZVERFAHREN UND DIFFERENTIALSCHUTZEINRICHTUNG**

DIFFERENTIAL PROTECTION METHOD AND DIFFERENTIAL PROTECTION UNIT

PROCÉDÉ ET SYSTÈME DE PROTECTION DIFFÉRENTIELLE

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**13.05.2009 Patentblatt 2009/20**

(73) Patentinhaber: **SIEMENS AKTIENGESELLSCHAFT**
**80333 München (DE)**

(72) Erfinder: **BÖHME, Klaus**
**12249 Berlin (DE)**

(56) Entgegenhaltungen:
**WO-A-93/24981    US-A- 5 808 844**

## Beschreibung

Die Erfindung bezieht sich auf ein Differentialschutzverfahren mit den Merkmalen gemäß dem Oberbegriff des Anspruchs 1.

Bekannt ist ein Differentialschutzgerät der Firma Siemens AG, das unter dem Produktnamen 7UT6x vertrieben wird. Dieses Differentialschutzgerät ist zur Durchführung eines Differentialschutzverfahrens geeignet, bei dem an mindestens zwei unterschiedlichen Messstellen einer Komponente jeweils Strommesswerte gemessen werden. Mit den Strommesswerten werden Differenzstromwerte und Stabilisierungswerte gebildet, und es wird ein Fehlersignal erzeugt, wenn im Rahmen einer Auslösebereichsprüfung festgestellt wird, dass ein aus einem der Differenzstromwerte und dem jeweils zugehörigen Stabilisierungswert gebildetes Messwertpaar in einem vorgegebenen Auslösebereich liegt. Bei hohen Kurzschlussströmen kann nun das Problem auftreten, das Stromwandler zum Wandeln der Ströme an den Messstellen unterschiedlich in Sättigung gehen und sättigungsbedingte Fehler auftreten; um dieses Sättigungsproblem in den Griff zu bekommen, weist das vorbekannte Differentialschutzgerät einen Sättigungsindikator auf, der eine auftretende Stromwandlersättigung erkennt und im Falle einer erkannten Stromwandlersättigung den Differentialschutz für eine vorab einstellbare Zeitspanne blockiert, um eine Fehlauslösung durch die Stromwandlersättigung zu vermeiden.

Hierzu ist beispielsweise aus der US 5,808,844 A bekannt, in einem zu dem Auslösebereich komplementären Sperren-Gebiet einen Zusatzstabilisierungsbereich vorzusehen. Wenn ein Messwertpaar einen Punkt im Zusatzstabilisierungsbereich beschreibt, wird eine Blockiereinrichtung aktiviert, die dann zurückgesetzt wird, wenn ein Messwertpaar außerhalb des Zusatzstabilisierungsbereichs liegt.

Der Erfindung liegt die Aufgabe zugrunde, ein Verfahren der eingangs angegebenen Art dahingehend zu verbessern, dass dieses noch zuverlässiger als bisher arbeitet.

Diese Aufgabe wird erfindungsgemäß durch ein Verfahren mit den Merkmalen gemäß Anspruch 1 gelöst. Vorteilhafte Ausgestaltungen des erfindungsgemäßen Verfahrens sind in Unteransprüchen angegeben.

Danach ist erfindungsgemäß vorgesehen, dass die Ähnlichkeit der Stromverläufe an den Messstellen geprüft wird und in Abhängigkeit von dem Maß der Ähnlichkeit eine modifizierte Auslösebereichsprüfung durchgeführt wird, wobei die Auslösebereichsprüfung derart modifiziert wird, dass die Auslöseempfindlichkeit für die Erzeugung des Fehlersignals mit abnehmender Ähnlichkeit der Stromverläufe reduziert wird.

Ein wesentlicher Vorteil des erfindungsgemäßen Verfahrens ist darin zu sehen, dass dieses kontinuierlich in Betrieb sein kann. Eine "Todphase", in der das Differentialschutzverfahren inaktiv ist, wird somit im Unterschied zum vorbekannten Verfahren vermieden. Beispielsweise kann auch im Falle einer Stromwandlersättigung das erfindungsgemäße Differentialschutzverfahren weiter betrieben werden, ohne dass es zu einer fehlerhaften Auslösung eines Fehlersignals kommen wird. Dies soll kurz anhand des nachfolgenden Beispiels verdeutlicht werden: Kommt es im Falle eines Kurzschlusses zu einer Stromwandlersättigung an einer von beispielsweise zwei Messstellen, so werden die gemessenen Stromverläufe an den beiden Messstellen unähnlich zueinander sein, weil einer der beiden Stromverläufe durch die Sättigung verfälscht wird. Im Rahmen des erfindungsgemäßen Verfahrens wird diese Unähnlichkeit erkannt werden, so dass beispielsweise von einem Normalbetriebsmodus in einen Sonderbetriebmodus geschaltet werden kann, bei dem eine modifizierte Auslösebereichsprüfung erfolgt. Im Rahmen dieser modifizierten Auslösebereichsprüfung wird die Auslöseempfindlichkeit für die Erzeugung des Fehlersignals bei zu geringer Ähnlichkeit der Stromverläufe reduziert, so dass Fehlauslösungen durch eine Stromwandlersättigung vermieden werden.

Entsprechendes gilt für andere "Störereignisse", die ein Differentialschutzverfahren erschweren oder verfälschen können: Beispielsweise beim Einschalten eines Transformators kann es zu einem "Inrush"-Effekt kommen, der eine Fehlauslösung zur Folge haben kann. Auch solche Effekte können mit dem erfindungsgemäßen Verfahren zuverlässig erkannt und derart behandelt werden, dass eine Fehlerzeugung eines Fehlersignals nunterbleibt; denn auch bei einem Inrush-Effekt unterscheiden sich die Strömverläufe an den unterschiedlichen Messstellen signifikant, so dass durch ein Herabsetzen der Auslöseempfindlichkeit in Abhängigkeit von der Ähnlichkeit bzw. Unähnlichkeit der Stromverläufe eine zuverlässige Fehlersignalerzeugung möglich ist.

Die Stromverläufe werden vorzugsweise anhand der aufgenommenen Strommesswerte ermittelt; beispielsweise wird der zeitliche Verlauf der Strommesswerte als Stromverlauf interpretiert und weiter verwendet. Alternativ können die Stromverläufe auch anhand der Differenzstromwerte und der Stabilisierungswerte ermittelt werden.

Die Komponenten, für die das beschriebene Differentialschutzverfahren eingesetzt werden kann, können beliebig sein: Als Komponenten kommen beispielsweise Leitungen, Transformatoren, Motoren, Netze und dergleichen mehr in Betracht.

Die Ähnlichkeit lässt sich besonders einfach und mit sehr guten Ergebnissen mit Hilfe eines neuronalen Netzes ermitteln, so dass der Einsatz eines neuronalen Netzes als sehr vorteilhaft angesehen wird. Ein neuronales Netz lässt sich für eine Ähnlichkeitserkennung beispielsweise dadurch trainieren, dass als "ähnlich" und als "unähnlich" zu erkennende Stromverläufe, die beispielsweise bei Sättigungs- oder Inrush-Effekten messtechnisch aufgezeichnet wurden, als Trainingssequenzen in das neuronale Netz eingespeist werden.

Gemäß einer alternativen Ausgestaltung des Verfahrens wird es als vorteilhaft angesehen, wenn die Ähnlichkeit der Stromverläufe quantitativ bestimmt wird, indem jeweils für jede Messstelle der Oberschwingungsanteil relativ zum Grundschwingungsanteil der Grundfrequenz erfasst wird und die Abweichung im Oberschwingungsverhalten zwischen den Messstellen als quantitatives Maß für die Ähnlichkeit der Stromverläufe weiter verwendet wird. Eine solche "Oberschwingungsanalyse" kann beispielsweise mit Hilfe einer Fourieranalyse durchgeführt werden.

Eine dritte vorteilhafte Ausgestaltung des Verfahrens sieht vor, dass zur Bestimmung der Ähnlichkeit der Stromverläufe die Kreuzkorrelation zwischen den Stromverläufen gebildet wird und ein Korrelationswert berechnet wird, der als quantitatives Maß für die Ähnlichkeit der Stromverläufe verwendet wird.

Eine modifizierte Auslösebereichsprüfung wird vorzugsweise durchgeführt, indem in Abhängigkeit von der Ähnlichkeit der Stromverläufe der vorgegebene Auslösebereich modifiziert wird und der modifizierte Auslösebereich zur Bildung des Fehlersignals verwendet wird.

Beispielsweise kann der Auslösebereich modifiziert werden, indem eine den Auslösebereich definierende Auslösekennlinie eines Auslösediagramms in Abhängigkeit von dem Maß der Ähnlichkeit der Stromverläufe verändert wird.

Auch kann der Auslösebereich beispielsweise modifiziert werden, indem in Abhängigkeit von der Ähnlichkeit der Stromverläufe aus einer vorgegebenen Gruppe von Hilfsauslösebereichen, denen jeweils ein Ähnlichkeitsintervall individuell zugeordnet ist, der passende Hilfsauslösebereich ausgewählt wird und dieser als modifizierter Auslösebereich weiter verwendet wird.

Alternativ und/oder zusätzlich ist es möglich, auch die Messwertpaare zu modifizieren und zu prüfen, ob die modifizierten Messwertpaare in dem modifizierten Auslösebereich liegen.

Beispielsweise können unter Beibehaltung des vorgegebenen Auslösebereichs die Messwertpaare modifiziert werden, und es kann geprüft werden, ob die modifizierten Messwertpaare in dem vorgegebenen Auslösebereich liegen.

Die Messwertpaare werden vorzugsweise modifiziert, indem der Stabilisierungswert und/oder der Differenzstromwert in Abhängigkeit von der Ähnlichkeit der Stromverläufe verändert wird.

Vorzugsweise wird der Stabilisierungswert mit abnehmender Ähnlichkeit der Stromverläufe erhöht. Beispielsweise kann der Stabilisierungswert um einen vorgegebenen Faktor erhöht werden, wenn die Ähnlichkeit der Stromverläufe ein vorgegebenes Maß unterschreitet.

Alternativ und/oder zusätzlich kann der Differenzstromwert mit abnehmender Ähnlichkeit der Stromverläufe reduziert werden. Beispielsweise kann der Differenzstromwert um einen vorgegebenen Faktor reduziert werden, wenn die Ähnlichkeit der Stromverläufe ein vorgegebenes Maß unterschreitet.

Wie bereits eingangs erwähnt, spielt das Problem der Stromwandlersättigung im Bereich der Differentialschutztechnik eine wichtige Rolle. Aus diesem Grunde wird es als vorteilhaft angesehen, wenn die Stromverläufe im Hinblick auf das Auftreten einer Stromwandlersättigung hin untersucht werden und im Falle einer erkannten Stromwandlersättigung die Auslöseempfindlichkeit gemäß einem für eine Stromwandlersättigung vorgegebenen Maß reduziert wird.

Auch können Einschaltvorgänge ein Differentialschutzverfahren stören, so dass es als vorteilhaft angesehen wird, wenn die Stromverläufe im Hinblick auf das Auftreten eines Einschaltvorganges hin untersucht werden und im Falle eines erkannten Einschaltvorganges die Auslöseempfindlichkeit gemäß einem für einen Einschaltvorgang vorgegebenen Maße reduziert wird.

Das beschriebene Verfahren kann beispielsweise bei Differentialschutzverfahren eingesetzt werden, bei denen die Stromverläufe an mindestens zwei unterschiedlichen Messstellen einer Leitung (als Komponente) gemessen werden.

Auch kann das beschriebene Verfahren bei Differentialschutzverfahren eingesetzt werden, bei denen die Stromverläufe an zwei unterschiedlichen Messstellen eines Transformators (als Komponente) gemessen werden. Vorzugsweise wird in diesem Falle eine der Messstellen auf der Hochspannungsseite des Transformators und die andere Messstelle auf der Niederspannungsseite des Transformators angeordnet. Bevorzugt wird die Auslöseempfindlichkeit reduziert, wenn ein Inrush-Vorgang bei dem Transformator erkannt wird.

Als Stabilisierungswert kann beispielsweise ein Summenstromwert gebildet werden.

Wird zum Erfassen der Ähnlichkeit der Stromverläufe ein neuronales Netz verwendet, so wird es als vorteilhaft angesehen, wenn dieses derart trainiert ist, dass es vorgegebene Störeffekte wie beispielsweise eine Stromwandlersättigung oder einen Inrush-Effekt individuell erkennen kann. Bei einer solchen Ausgestaltung des neuronalen Netzes wird die Auslöseempfindlichkeit für die Erzeugung des Fehlersignals bevorzugt störeffektindividuell herabgesetzt; dies bedeutet beispielsweise, dass im Falle eines erkannten Inrush-Effekts eine andere "Art" bzw. ein anderes Ausmaß der Herabsetzung der Auslöseempfindlichkeit erfolgt als im Falle einer erkannten Stromwandlersättigung: Beispielsweise wird im Falle eines Inrush-Effekts die Auslöseempfindlichkeit mehr oder weniger herabgesetzt als bei einer Stromwandlersättigung.

Die Erfindung bezieht sich darüber hinaus auf eine Differentialschutzeinrichtung mit zwei Anschlüssen zum unmittelbaren oder mittelbaren Anschluss an zumindest zwei unterschiedlichen Messstellen einer Komponente sowie mit einer Auswerteinrichtung, die dazu geeignet ist, Strommesswerte an den Messstellen auszuwerten und mit den an den zumindest zwei unterschiedlichen Messstellen gemessenen Strommesswerten Differenzstromwerte und Stabilisierungswerte zu bilden und ein Fehlersignal zu erzeugen, wenn ein aus einem der Differenzstromwerte und dem jeweils zugehörigen Stabilisierungswert gebildetes Messwertpaar in einem vorgegebenen Auslösebereich liegt.

Der Erfindung liegt bezüglich einer solchen Differentialschutzeinrichtung die Aufgabe zugrunde, diese dahingehend zu verbessern, dass sie noch zuverlässiger als bisher arbeitet.

Diese Aufgabe wird erfindungsgemäß dadurch gelöst, dass die Auswerteinrichtung geeignet ist, die Ähnlichkeit der Stromverläufe zu prüfen und in Abhängigkeit von dem Maß der Ähnlichkeit eine modifizierte Auslösebereichsprüfung durchzuführen, wobei die Auslösebereichsprüfung derart modifiziert wird, dass die Auslöseempfindlichkeit für die Erzeugung des Fehlersignals mit abnehmender Ähnlichkeit der Stromverläufe reduziert wird.

Bezüglich der Vorteile der erfindungsgemäßen Differentialschutzeinrichtung sei auf die obigen Ausführungen im Zusammenhang mit dem erfindungsgemäßen Verfahren verwiesen, da sich die Vorteile der erfindungsgemäßen Differentialschutzeinrichtung und die des erfindungsgemäßen Verfahrens im Wesentlichen entsprechen.

Vorzugsweise ist bei einer solchen Differentialschutzeinrichtung vorgesehen, dass die Auswerteinrichtung eine Datenverarbeitungsanlage, insbesondere eine Mikroprozessoreinrichtung, umfasst, die derart programmiert ist, dass sie ein Differentialschutzverfahren wie oben beschrieben durchführen kann.

Die Erfindung wird nachfolgend anhand von Ausführungsbeispielen näher erläutert; dabei zeigen beispielhaft:

Figur 1     eine erste Anordnung mit einem Ausführungsbeispiel für eine erfindungsgemäße Differentialschutzeinrichtung, anhand der Anordnung wird auch das erfindungsgemäße Verfahren beispielhaft beschrieben,

Figur 2     ein erstes Ausführungsbeispiel für den Aufbau und die Arbeitsweise der Differentialschutzeinrichtung gemäß der Figur 1,

Figur 3     beispielhaft ein Auslösediagramm mit einer Auslösekennlinie, die innerhalb des Auslösediagramms einen Auslösebereich von einem "Nichtauslösebereich" trennt, man erkannt die Verschiebung eines Messwertpaares durch eine Vergrößerung des Stabilitätswertes,

Figur 4     beispielhaft Stromverläufe I1(t) und I2(t) ohne Stromwandlersättigung für einen fehlerfreien Fall,

Figur 5     beispielhaft Stromverläufe I1(t) und I2(t) mit Stromwandlersättigung beim Stromverlauf I1(t) für einen fehlerfreien Fall,

Figur 6     ein zweites Ausführungsbeispiel für den Aufbau und die Arbeitsweise der Differentialschutzeinrichtung gemäß der Figur 1,

Figur 7     beispielhaft ein Auslösediagramm, in dem die Verschiebung eines Messwertpaares durch eine Verkleinerung des Differenzstromwertes erfolgt,

Figur 8     ein drittes Ausführungsbeispiel für den Aufbau und die Arbeitsweise der Differentialschutzeinrichtung gemäß der Figur 1,

Figur 9     beispielhaft ein Auslösediagramm, in dem die Verschiebung eines Messwertpaares durch eine Verkleinerung des Differenzstromwertes und eine Vergrößerung des Stabilitätswertes erfolgt,

Figur 10    eine zweite Anordnung mit einem Ausführungsbeispiel für eine erfindungsgemäße Differentialschutzeinrichtung und mit einem Transformator,

Figur 11    beispielhaft Stromverläufe I1(t) und I2(t) für den Fall eines Inrush-Effekts beim Transformator gemäß der Figur 10,

Figur 12    ein viertes Ausführungsbeispiel für den Aufbau und die Arbeitsweise der Differentialschutzeinrichtung gemäß der Figur 1,

Figur 13    beispielhaft das Verschieben einer Auslösekennlinie in einem Auslösediagramm,

Figur 14    ein fünftes Ausführungsbeispiel für den Aufbau und die Arbeitsweise der Differentialschutzeinrichtung gemäß den Figuren 1 oder 10 und

Figur 15    ein sechstes Ausführungsbeispiel für den Aufbau und die Arbeitsweise der Differentialschutzeinrichtung gemäß den Figuren 1 oder 10.

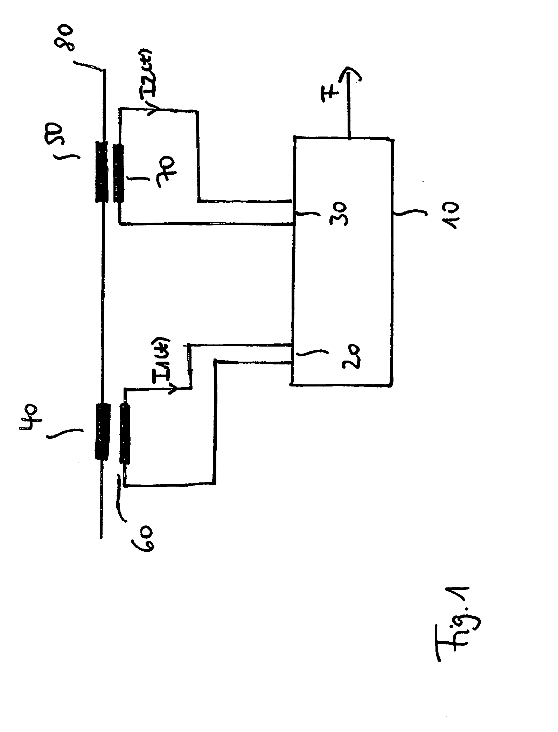

In den Figuren 1 - 15 werden aus Gründen der Übersicht für identische oder vergleichbare Komponenten stets dieselben Bezugszeichen verwendet.

In der Figur 1 erkennt man eine Anordnung mit einem Ausführungsbeispiel einer Differentialschutzeinrichtung 10 mit zwei Anschlüssen 20 und 30 zum Anschluss an zwei Messstellen 40 und 50. Die beiden Messstellen sind durch zwei Stromwandler 60 und 70 gebildet, die an eine Komponente in Form eines Phasenleiters 80 einer nicht weiter dargestellten Energieversorgungsleitung angeschlossen sind.

Die beiden Stromwandler 60 und 70 erzeugen ausgangsseitig Strommesswerte I1(t) und I2(t), die den Stromverlauf an den beiden Messstellen wiedergeben. Die Differentialschutzeinrichtung 10 überprüft diese Strommesswerte auf das Vorliegen eines Fehlers und erzeugt ausgangsseitig ein Fehlersignal F, wenn ein Fehler festgestellt wurde.

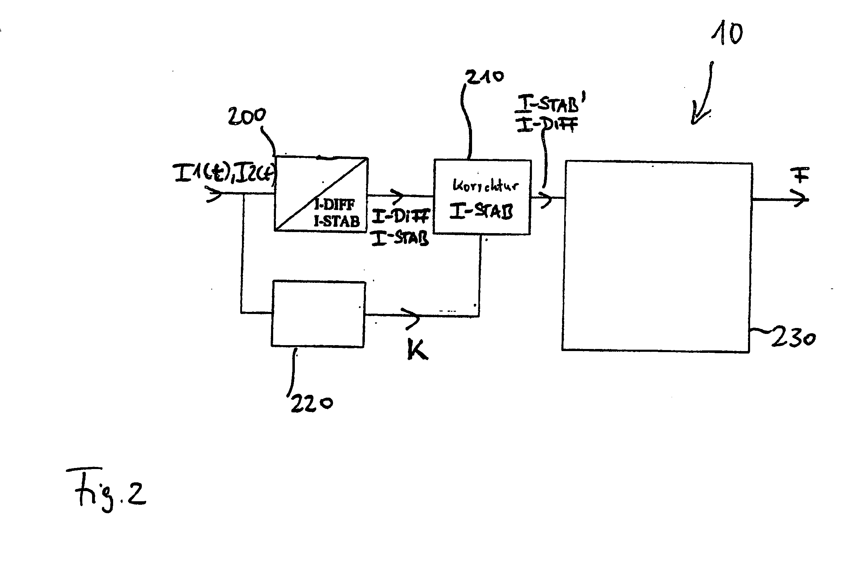

In der Figur 2 ist ein erstes Ausführungsbeispiel für den Aufbau und die Arbeitsweise der Differentialschutzeinrichtung 10 gemäß der Figur 1 gezeigt. Man erkennt, dass die Differentialschutzeinrichtung 10 eingangsseitig eine Recheneinrichtung 200 aufweist. Der Recheneinrichtung 200 ist ausgangsseitig eine Korrektureinrichtung 210 nachgeordnet, die außerdem mit einer Prüfeinrichtung 220 und einer Kennlinieneinrichtung 230 in Verbindung steht. Die Prüfeinrichtung 220 ist darüber hinaus ebenfalls an den durch die beiden Anschlüsse 20 und 30 gebildeten Eingang der Differentialschutzeinrichtung 10 angeschlossen.

Die Differentialschutzeinrichtung 10 lässt sich beispielsweise wie folgt betreiben:

Die Recheneinrichtung bildet mit den eingangsseitig anliegenden Messwerten I1(t) und I2(t) Differenzstromwerte I-DIFF und Stabilisierungswerte I-STAB, beispielsweise gemäß den folgenden Formeln:

$$\text{I-DIFF(t)} = \left| \text{I1(t)} - \text{I2(t)} \right|$$

$$\text{I-STAB(t)} = \left| \text{I1(t)} \right| + \left| \text{I2(t)} \right|$$

Die in dieser Weise gebildeten Differenzstromwerte I-DIFF und Stabilisierungswerte I-STAB gelangen zu der Korrektureinrichtung 210, in der diese mit einem von der Prüfeinrichtung 220 gebildeten Korrekturwert K korrigiert werden. Bei dem ersten Ausführungsbeispiel gemäß der Figur 2 wird beispielhaft davon ausgegangen, dass nur die Stabilitätswerte I-STAB von der Korrektur betroffen sind, nicht jedoch die Differenzstromwerte I-DIFF. Ausgangsseitig erzeugt die Korrektureinrichtung somit korrigierte bzw. modifizierte Stabilitätswerte I-STAB' und entsprechende korrigierte bzw. modifizierte Messwertpaare (I-DIFF, I-STAB') gemäß

$$\text{I-STAB'} = \text{I-STAB} * \text{K}$$

$$(\text{I-DIFF, I-STAB'}) = (\text{I-DIFF, I-STAB*K})$$

Für Korrekturwerte größer als Eins werden die Stabilitätswerte I-STAB also vergrößert.

Die modifizierten Messwertpaare (I-DIFF, I-STAB') gelangen zu der Kennlinieneinrichtung, die überprüft, ob das jeweils vorliegende Messwertpaar (I-DIFF, I-STAB') innerhalb eines vorgegebenen Auslösebereichs liegt oder nicht.

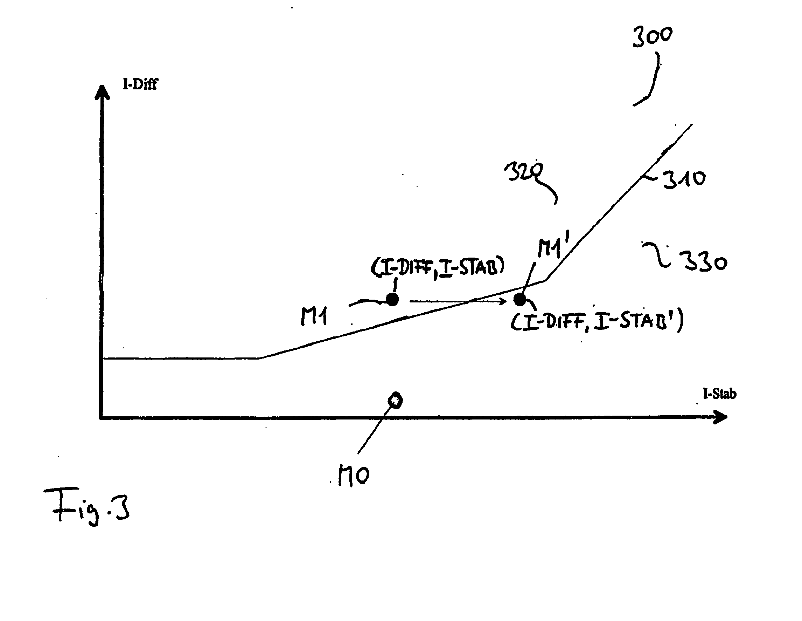

Die Arbeitsweise der Kennlinieneinrichtung 230 wird nachfolgend beispielhaft anhand der Figur 3 erläutert. Man sieht in der Figur 3 ein Auslösediagramm 300 mit einer Auslösekennlinie 310, die innerhalb des Auslösediagramms 300 einen Auslösebereich 320 von einem Normalbereich (bzw. "Nichtauslösebereich") 330 trennt.

Die Kennlinieneinrichtung 230 überprüft, ob das Messwertpaar (I-DIFF, I-STAB') in dem Normalbereich 330 liegt: Ist dies der Fall, so wird ausgangsseitig ein Signal erzeugt, das anzeigt, dass kein Fehler vorliegt; beispielsweise wird ein digitales Signal mit einer binären Null gebildet.

Liegt das Messwertpaar (I-DIFF, I-STAB') hingegen im Auslösebereich 320, so wird das Fehlersignal F gebildet und ausgangsseitig abgegeben; beispielsweise wird als Fehlersignal ein digitales Signal mit einer binären Eins erzeugt.

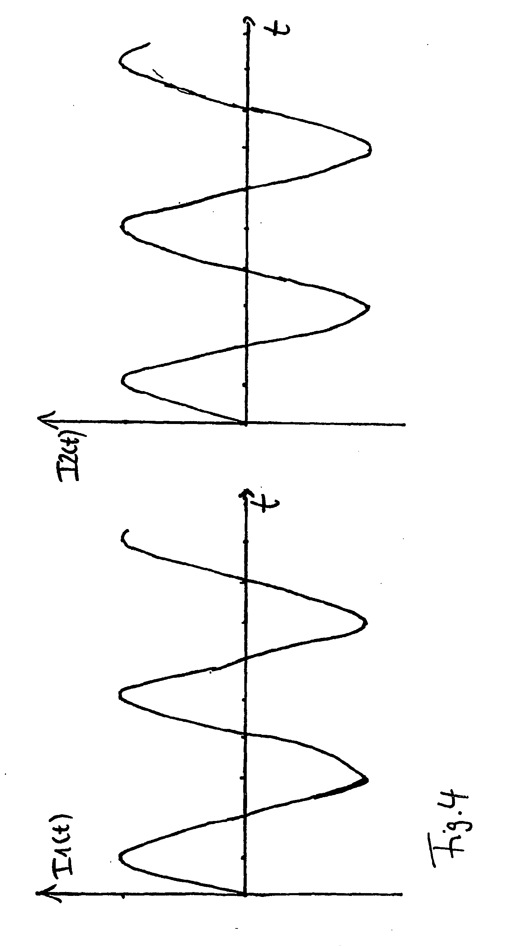

In der Figur 4 sind beispielhaft zwei Stromverläufe I1(t) und I2(t) für einen fehlerfreien Fall gezeigt. Man erkennt, dass die sinusförmigen Verläufe I1(t) und I2(t) annähernd identisch sind. Demgemäß gilt annähernd:

$$\text{I-DIFF(t)} = \left| \text{I1(t)} - \text{I2(t)} \right| \approx 0$$

$$\text{I-STAB(t)} = \left| \text{I1(t)} \right| + \left| \text{I2(t)} \right| \approx 2* \left| \text{I1(t)} \right|$$

Das entsprechende Messwertpaar (I-DIFF, I-STAB) ist beispielhaft in der Figur 3 eingetragen und mit dem Bezugszeichen MO gekennzeichnet. Man erkennt, dass das Messwertpaar (I-DIFF, I-STAB) im Normalbereich 330 liegt und keine Fehlersignalerzeugung erfolgt.

In der Prüfeinrichtung 220 werden die Stromverläufe I1(t) und $I_2$(t) auf ihre Ähnlichkeit hin untersucht, und es wird ein entsprechender Ähnlichkeitswert A gebildet. Beispielsweise gibt ein Ähnlichkeitswert A=1 an, dass die beiden Stromverläufe identisch bzw. hochgradig ähnlich sind; Ähnlichkeitswerte unter Eins sind beispielsweise ein Hinweis auf eine Unähnlichkeit.

Die Bildung des Ähnlichkeitswerts kann in der Prüfeinrichtung 220 auf verschiedene Weise erfolgen. Beispielsweise kann der Ähnlichkeitswert A errechnet werden gemäß

$$A = \frac{1}{T} \int_0^T I1(t) * I2(t + \tau) d\tau$$

wobei T ein zeitliches Auswertintervall für die Ähnlichkeitsprüfung bezeichnet.

Alternativ kann die Ähnlichkeit A der Stromverläufe I1(t) und I2(t) quantitativ bestimmt werden, indem für die Ströme jeweils der Oberschwingungsanteil relativ zum Grundschwingungsanteil der Grundfrequenz erfasst wird. Die Abweichung im Oberschwingungsverhalten zwischen den beiden Stromverläufen I1(t) und I2(t) wird dann als quantitatives Maß für die Ähnlichkeit der Stromverläufe weiter verwendet.

Besonders gute Ähnlichkeitsergebnisse lassen sich durch den Einsatz eines neuronalen Netzes erhalten, das in der Prüfeinrichtung 220 hinterlegt sein kann. Ein solches neuronales Netz lässt sich auf das Erkennen einer Ähnlichkeit trainieren, indem gezielt ähnliche und unähnliche Stromverläufe eingespeist werden, bis die Ähnlichkeit korrekt erkannt wird. Das Trainieren neuronaler Netze ist in der Fachwelt allgemein bekannt und beispielsweise beschrieben in D. E. Rumelhart, J. L. Mc Clelland, Parallel Distributed Processing I+II, MIT Press 1986.

Bezüglich der beiden in der Figur 4 beispielhaft gezeigten Stromverläufe I1(t) und I2(t) wird die Prüfeinrichtung 220 somit eine sehr große Ähnlichkeit erkennen und einen entsprechend großen Ähnlichkeitswert A nahe 1 erzeugen. Mit dem Ähnlichkeitswert A bildet die Prüfeinrichtung 220 außerdem einen Korrekturwert K, der für ähnliche Stromverläufe bei Eins liegt und bei unähnlichen Stromverläufen größer als Eins ist. Die Bildung des Korrekturwerts K kann beispielsweise wie folgt erfolgen:

$$K = 1 \text{ für } A \geq 0,8 \text{ und}$$

$$K = 2 \text{ für } A < 0,8.$$

Alternativ kann der Korrekturwert K auch anders gebildet werden, beispielsweise gemäß

$$K = 1/A$$

Bei der letztgenannten Berechnungsart wird der Korrekturwert K also umso größer, je kleiner die Ähnlichkeit A ist.

Im Falle ähnlicher Stromverläufe werden somit sowohl der Ähnlichkeitswert A als auch der Korrekturwert K ungefähr bei Eins liegen, so dass das Messwertpaar (I-DIFF, I-STAB) durch die Korrektur innerhalb der Korrektureinrichtung 210 im Wesentlichen unbeeinflusst bleibt.

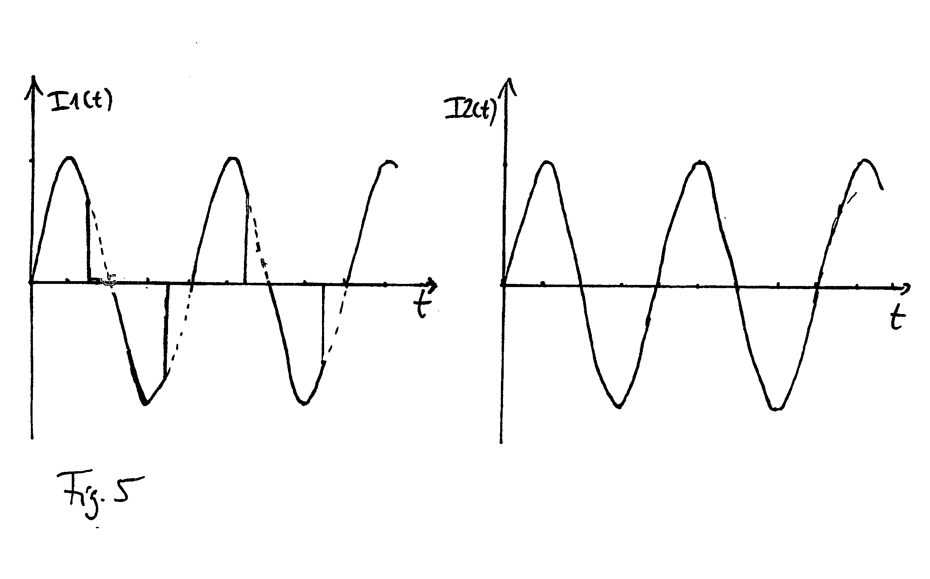

Bei sehr großen Strömen kann nun der Fall auftreten, dass einer der beiden Stromwandler 60 oder 70, beispielsweise der Stromwandler in die Stromwandlersättigung getrieben wird, wodurch der Stromverlauf I1(t) am Ausgang des Stromwandlers 60 stark verfälscht wird. Dies zeigt beispielhaft die Figur 5 für den Fall, dass der Stromwandler 70 von keiner Stromwandlersättigung betroffen ist.

Aufgrund der unterschiedlichen Stromwandlersättigungseffekte in den beiden Stromwandlern wird der Differenzstromwert I-DIFF anwachsen und das Messwertpaar (I-DIFF, I-STAB) seine Position in Richtung größerer Differenzstromwerte verlagern; dies zeigt beispielhaft die Figur 3, in der das Messwertpaar im Falle einer Stromwandlersättigung mit dem Bezugszeichen M1 gekennzeichnet ist. Obwohl im fehlerfreien Fall die beiden Ströme I1(t) und I2(t) identisch sind, liegt das Messwertpaar im Auslösebereich 320, so dass fälschlicherweise ein Fehlersignal F erzeugt werden würde, wenn keine Korrektur erfolgte. An dieser Stelle wird die Korrektureinrichtung 220 wirksam, die eine Korrektur des Messwertpaares (I-DIFF, I-STAB) in Abhängigkeit von der Ähnlichkeit A bzw. dem Korrekturwert K durchführt, indem sie die Lage des Messwertpaares verschiebt, und zwar hin zu größeren Stabilitätswerten I-STAB'. Das Verschieben erfolgt, indem der gemessene Stabilitätswert I-STAB mit dem Korrekturfaktor K multipliziert wird gemäß:

$$I\text{-}STAB' = I\text{-}STAB*K$$

Die resultierende Lage des Messwertpaares im Auslösediagramm 300 ist mit dem Bezugszeichen M1' gekennzeichnet. Man sieht, dass das Messwertpaar aufgrund der Korrektur nicht mehr im Auslösebereich 320, sondern im Normalbereich 330, liegt und somit kein Fehlersignal mehr erzeugt wird. Durch die Korrektur wird also eine Fehlauslösung vermieden.

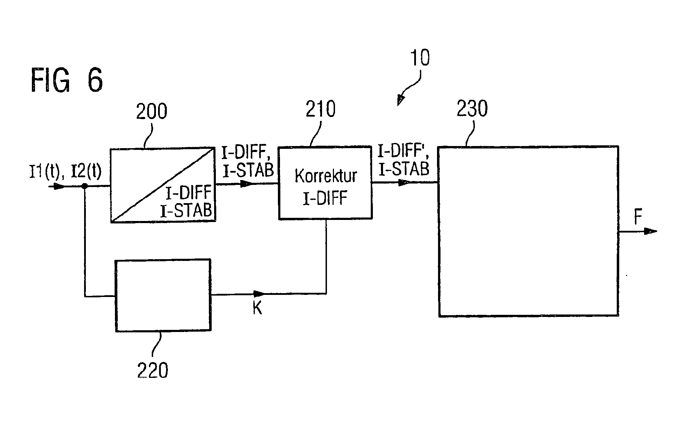

Die Figur 6 zeigt ein zweites Ausführungsbeispiel für den Aufbau und die Arbeitsweise der Differentialschutzeinrichtung 10 gemäß der Figur 1.

Im Unterschied zum ersten Ausführungsbeispiel gemäß der Figur 2, bei dem die Stabilitätswerte I-STAB von der Korrektur betroffen sind, werden bei dem zweiten Ausführungsbeispiel die Differenzstromwerte I-DIFF korrigiert, und es werden modifizierte Differenzstromwerte I-DIFF' gebildet, beispielsweise gemäß

$$\text{I-DIFF' = I-DIFF / K}$$

Die Differenzstromwerte I-DIFF werden also verkleinert. Somit ergeben sich korrigierte bzw. modifizierte Messwertpaare (I-DIFF', I-STAB) gemäß

$$\text{(I-DIFF', I-STAB) = (I-DIFF / K, I-STAB)}$$

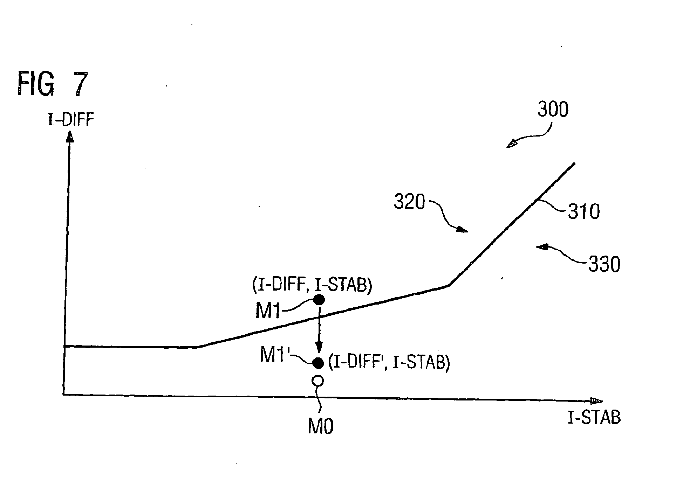

Durch die Modifikation bzw. Korrektur der Differenzstromwerte werden die modifizierten Messwertpaare (I-DIFF', I-STAB) im Falle einer Kennlinienunähnlichkeit nach unten verschoben. Dies zeigt die Figur 7 für den Fall einer Stromwandlersättigung des Stromwandlers 60 im fehlerfreien Fall. Man erkennt, dass durch die Verkleinerung des Differenzstromwertes I-DIFF das Messwertpaar aus dem Auslösebereich 320 in den Normalbereich 330 verschoben wird, so dass eine ungerechtfertigte Fehlersignalerzeugung unterbleibt.

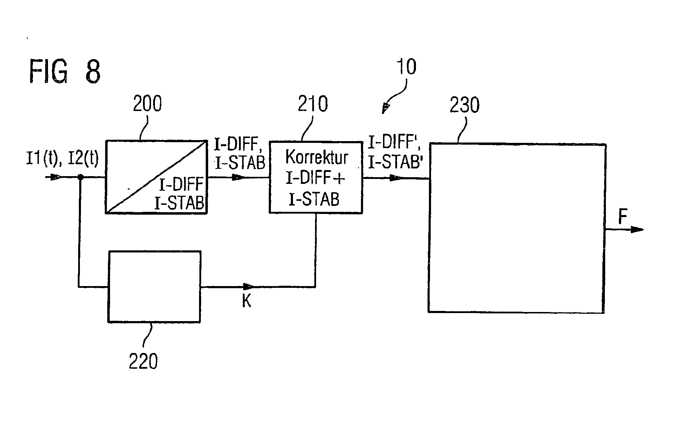

Die Figur 8 zeigt ein drittes Ausführungsbeispiel für den Aufbau und die Arbeitsweise der Differentialschutzeinrichtung 10 gemäß der Figur 1.

Im Unterschied zum ersten und zweiten Ausführungsbeispiel gemäß den Figuren 2 und 6, bei denen entweder der Stabilitätswert I-STAB oder der Differenzstromwert I-DIFF von der Korrektur betroffen sind, werden bei dem dritten Ausführungsbeispiel sowohl der Stabilitätswert I-STAB als auch der Differenzstromwert I-DIFF korrigiert, beispielsweise gemäß

$$\text{I-DIFF' = I-DIFF / K}$$

$$\text{I-STAB' = I-STAB * K}$$

Somit ergeben sich korrigierte bzw. modifizierte Messwertpaare (I-DIFF', I-STAB*) gemäß

$$\text{(I-DIFF', I-STAB') = (I-DIFF / K, I-STAB * K)}$$

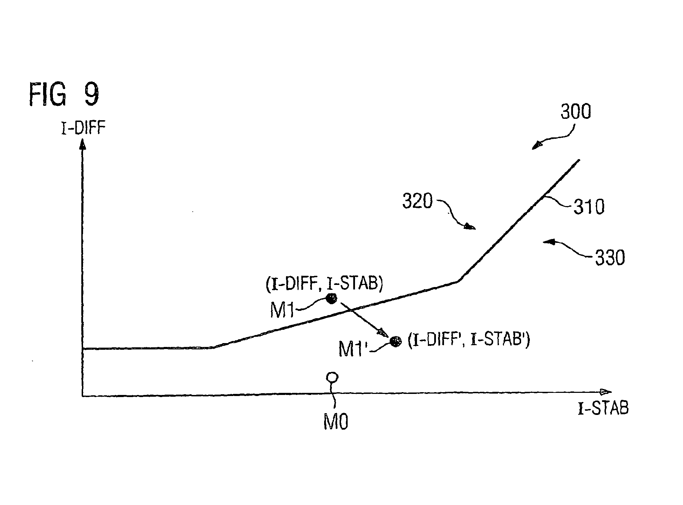

Durch die Modifikation bzw. Korrektur der Differenzstromwerte werden die modifizierten Messwertpaare (I-DIFF', I-STAB) im Falle einer Kennlinienunähnlichkeit also nach rechts unten verschoben. Dies zeigt die Figur 9 für den Fall einer Stromwandlersättigung des Stromwandlers 60 im fehlerfreien Fall. Man erkennt, dass durch die Verkleinerung des Differenzstromwertes I-DIFF und die gleichzeitige Vergrößerung des Stabilitätswertes I-STAB das Messwertpaar aus dem Auslösebereich 320 in den Normalbereich 330 verschoben wird, so dass eine ungerechtfertigte Fehlersignalerzeugung unterbleibt.

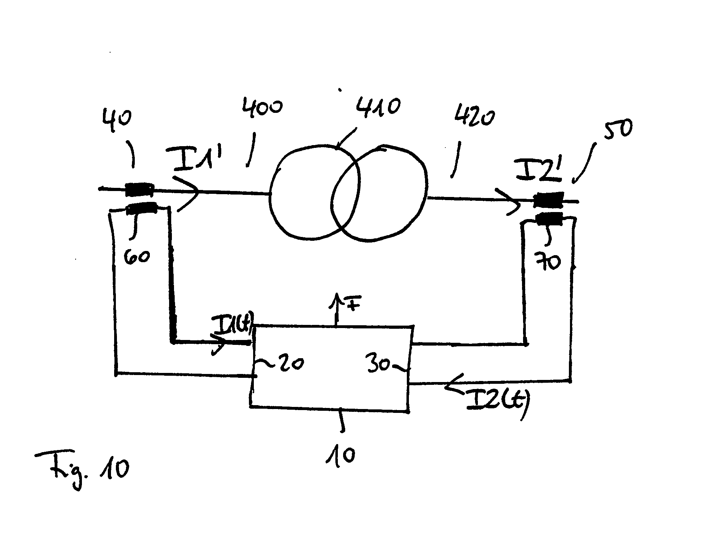

In der Figur 10 erkennt man eine weitere Anordnung mit einem Ausführungsbeispiel einer Differentialschutzeinrichtung 10. Die zwei Anschlüsse 20 und 30 sind an zwei Messstellen 40 und 50 angeschlossen. Eine der Messstellen 40 ist auf der Hochspannungsseite 400 eines Transformators 410 und die andere Messstelle 50 auf der Niederspannungsseite 420 des Transformators 410 angeordnet.

Die beiden Stromwandler 60 und 70 erzeugen ausgangsseitig Messwerte I1(t) und I2(t), die den Stromverlauf an den beiden Messstellen unter Berücksichtigung des Umsetzverhältnisses des Transformators 410 wiedergeben. Die Differentialschutzeinrichtung 10 überprüft die Messwerte I1(t) und I2(t) bzw. die entsprechenden Stromverläufe auf das Vorliegen eines Fehlers und erzeugt ausgangsseitig ein Fehlersignal F, wenn ein Fehler festgestellt wurde.

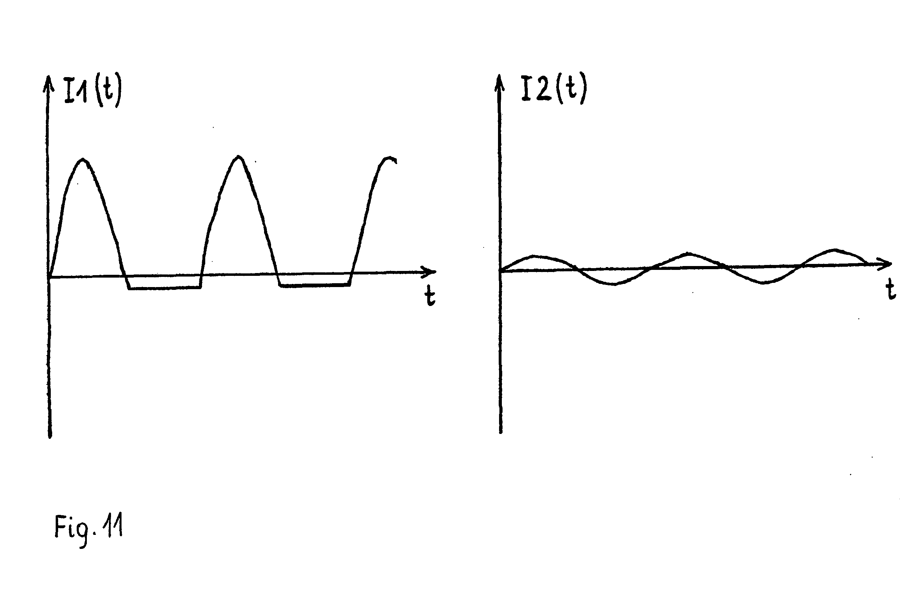

Beim Einschaltvorgang eines Transformators kann es zu einem Einschalteffekt kommen, der fachsprachlich Inrush-Effekt genannt wird und in der Figur 11 beispielhaft gezeigt ist. Man erkennt in der Figur 11 den Stromverlauf I1 (t) auf der Hochspannungsseite 400 des Transformators 410 und den Stromverlauf I2 (t) auf der Niederspannungsseite 420 des Transformators. Man sieht, dass der Stromverlauf I1(t) auf der Hochspannungsseite 400 im Wesentlichen mit der doppelten Grundfrequenz schwingt und somit einen sehr großen Oberschwingungsanteil aufweist. Im Unterschied dazu ist der Stromverlauf I2(t) auf der Niederspannungsseite 420 im Wesentlichen sinusförmig mit der Grund- bzw. Netzfrequenz.

Eine entsprechende Prüfung der Ähnlichkeit der beiden Stromverläufe I1(t) und I2(t) wird somit einen sehr geringen Ähnlichkeitswert A und einen entsprechend großen Korrekturwert K ergeben, was sich in einer entsprechenden Verschiebung des Messwertpaares (I-DIFF, I-STAB) niederschlägt, so dass eine fehlerhafte Auslösung des Fehlersignals F vermieden wird.

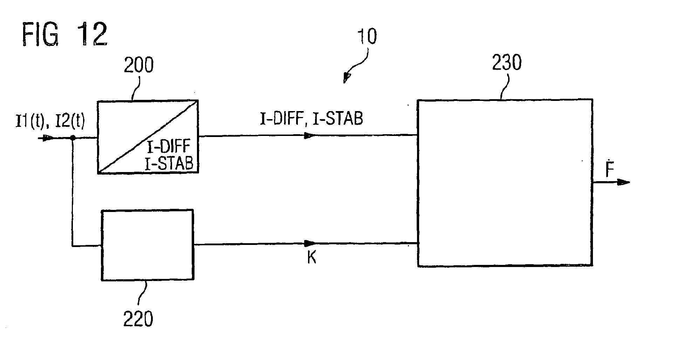

Die Figur 12 zeigt ein viertes Ausführungsbeispiel für den Aufbau und die Arbeitsweise der Differentialschutzeinrichtung 10 gemäß der Figur 1 bzw. 10.

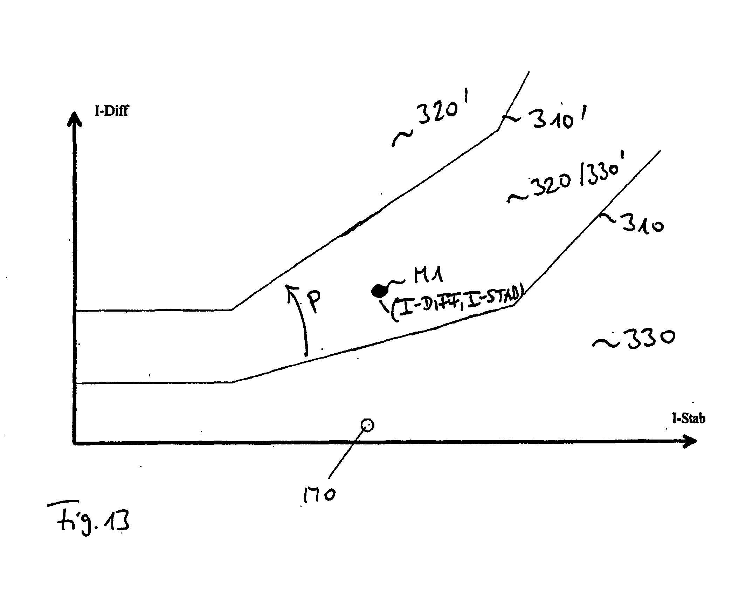

Im Unterschied zu den Ausführungsbeispielen gemäß den Figuren 2, 6 und 8, bei denen der Stabilitätswert I-STAB und/oder der Differenzstromwert I-DIFF von der Korrektur betroffen sind, wird bei dem vierten Ausführungsbeispiel die Auslösekennlinie 310 in Abhängigkeit von der Ähnlichkeit A bzw. dem Korrekturwert K verschoben, so dass ein modifizierter Auslösebereich 320' (vgl. Figur 13) gebildet wird. Demgemäß ist die Prüfeinrichtung 220 ausgangsseitig mit der Kennlinieneinrichtung 230 und nicht mit einer Korrektureinrichtung 210 (vgl. Figur 2) verbunden. Die Messwertpaare (I-DIFF, I-STAB) gelangen somit unkorrigiert zu der Kennlinieneinrichtung 230.

Wie sich in der Figur 13 erkennen lässt, kann im Falle einer großen Unähnlichkeit die Auslösekennlinie 310 so stark verschoben werden (vgl. verschobene Auslösekennlinie 310'), dass das Messwertpaar (I-DIFF, I-STAB) im Normalbereich 330' liegt, obwohl es ohne eine Verschiebung der Auslösekennlinie 310 im Auslösebereich 320 liegen würde. Durch diese Verschiebung der Auslösekennlinie 310 lässt sich im Falle einer Unähnlichkeit der Stromverläufe also eine fehlerhafte Auslösung des Fehlersignals F vermeiden Das Verschieben der Auslösekennlinie ist in der Figur 13 mit einem Pfeil P gekennzeichnet.

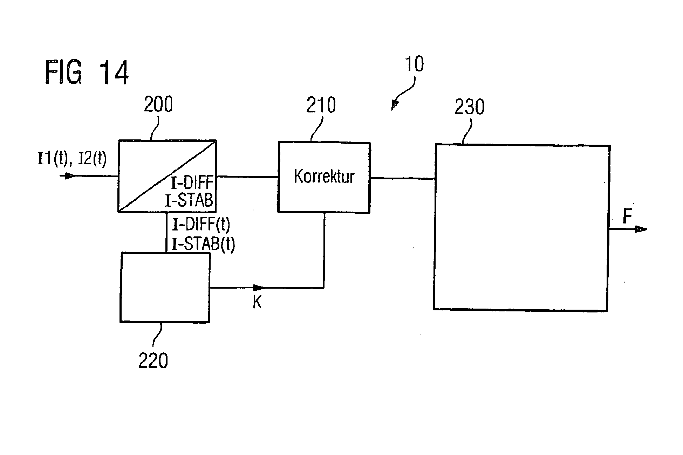

Die Figur 14 zeigt ein fünftes Ausführungsbeispiel für den Aufbau und die Arbeitsweise der Differentialschutzeinrichtung 10 gemäß der Figur 1 bzw. 10.

Im Unterschied zu den Ausführungsbeispielen gemäß den Figuren 2, 6, 8 und 12, bei denen die Stromverläufe unmittelbar aus den Messwerten I1(t) und I2(t) abgeleitet werden, werden bei diesem Ausführungsbeispiel die errechneten Stabilitätswerte I-STAB(t) und die Differenzstromwerte I-DIFF(t) ausgewertet, und es wird mit diesen die Ähnlichkeit der Stromverläufe ermittelt. Die Berechnung des Korrekturwerts K erfolgt somit ebenfalls mit Stromverläufen, die aus den errechneten Stabilitätswerten I-STAB(t) und den errechneten Differenzstromwerten I-DIFF(t) gebildet sind.

Der Korrekturwert K wird nachfolgend zur Modifikation bzw. Korrektur der Stabilitätswerte I-STAB und/oder der Differenzstromwerte I-DIFF herangezogen; dies zeigt beispielhaft die Figur 14.

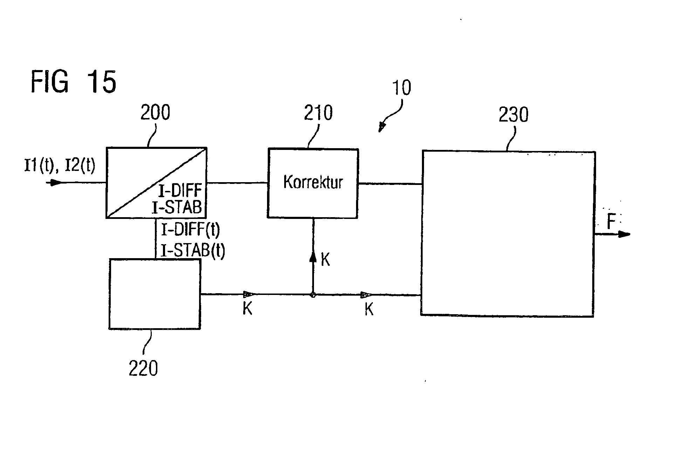

Alternativ oder zusätzlich kann auch eine Verschiebung der Auslösekennlinie 310 erfolgen, wenn der Korrekturwert K in die Kennlinieneinrichtung 230 eingespeist wird (vgl. Figur 15).

Die in den obigen Figuren gezeigten Komponenten der Differentialschutzeinrichtung 10 - also die Recheneinrichtung 200, die Korrektureinrichtung 210, die Prüfeinrichtung 220 und die Kennlinieneinrichtung 230 - können beispielsweise durch eine einzige Auswerteinrichtung gebildet sein. Eine solche Auswerteinrichtung kann beispielsweise durch eine Datenverarbeitungsanlage, insbesondere eine Mikroprozessoreinrichtung, gebildet sein, die - wie erläutert - programmiert ist.

**Patentansprüche**

1. Differentialschutzverfahren zum Erzeugen eines Fehlersignals (F), bei dem

    - an mindestens zwei unterschiedlichen Messstellen (40, 50) einer Komponente (80, 410) jeweils Strommesswerte (I1(t), I2(t)) gemessen werden und mit den Strommesswerten Differenzstromwerte (I-DIFF) und Stabilisierungswerte (I-STAB) gebildet werden,
    - und das Fehlersignal erzeugt wird, wenn im Rahmen einer Auslösebereichsprüfung festgestellt wird, dass ein aus einem der Differenzstromwerte und dem jeweils zugehörigen Stabilisierungswert gebildetes Messwertpaar in einem vorgegebenen Auslösebereich (320, 320') liegt,

    **dadurch gekennzeichnet, dass**

    - die Ähnlichkeit der Stromverläufe geprüft wird und in Abhängigkeit von dem Maß der Ähnlichkeit (A) eine modifizierte Auslösebereichsprüfung durchgeführt wird,
    - wobei die Auslösebereichsprüfung derart modifiziert wird, dass die Auslöseempfindlichkeit für die Erzeugung des Fehlersignals mit abnehmender Ähnlichkeit der Stromverläufe reduziert wird.

2. Verfahren nach Anspruch 1,
**dadurch gekennzeichnet, dass** die Ähnlichkeit der Stromverläufe mittels eines neuronalen Netzes ermittelt wird.

3. Verfahren nach Anspruch 1,
**dadurch gekennzeichnet, dass** die Ähnlichkeit der Stromverläufe quantitativ bestimmt wird, indem jeweils für jede Messstelle jeweils der Oberschwingungsanteil relativ zum Grundschwingungsanteil der Grundfrequenz erfasst wird und die Abweichung im Oberschwingungsverhalten zwischen den Messstellen als quantitatives Maß für die Ähnlichkeit der Stromverläufe weiter verwendet wird.

4. Verfahren nach Anspruch 1,
**dadurch gekennzeichnet, dass** die Ähnlichkeit der Stromverläufe bestimmt wird, indem die Kreuzkorrelation zwischen den beiden Stromverläufen gebildet wird und ein Korrelationswert berechnet wird, der als quantitatives Maß für die Ähnlichkeit der Stromverläufe verwendet wird.

5. Verfahren nach einem der voranstehenden Ansprüche,
**dadurch gekennzeichnet, dass** eine modifizierte Auslösebereichsprüfung durchgeführt wird, indem in Abhängigkeit von der Ähnlichkeit (A) der Stromverläufe der vorgegebene Auslösebereich (320) modifiziert wird und der modifizierte Auslösebereich (320') zur Bildung des Fehlersignals verwendet wird.

6. Verfahren nach Anspruch 5,
**dadurch gekennzeichnet, dass** der Auslösebereich modifiziert wird, indem eine den Auslösebereich definierende Auslösekennlinie eines Auslösediagramms in Abhängigkeit von dem Maß der Ähnlichkeit (A) der Stromverläufe verändert wird.

7. Verfahren nach Anspruch 5 oder 6,
**dadurch gekennzeichnet, dass** der Auslösebereich modifiziert wird, indem in Abhängigkeit von der Ähnlichkeit der Stromverläufe aus einer vorgegebenen Gruppe von Hilfsauslösebereichen, denen jeweils ein Ähnlichkeitsintervall individuell zugeordnet ist, der passende Hilfsauslösebereich ausgewählt wird und dieser als modifizierter Auslösebereich weiter verwendet wird.

8. Verfahren nach einem der voranstehenden Ansprüche,
**dadurch gekennzeichnet, dass** die Messwertpaare modifiziert werden und geprüft wird, ob die modifizierten Messwertpaare ((I-DIFF', I-STAB), (I-DIFF, I-STAB'), (I-DIFF', I-STAB')) in dem modifizierten Auslösebereich liegen.

9. Verfahren nach einem der voranstehenden Ansprüche 1-4,
**dadurch gekennzeichnet, dass** unter Beibehaltung des vorgegebenen Auslösebereichs (320) die Messwertpaare modifiziert werden und geprüft wird, ob die modifizierten Messwertpaare ((I-DIFF', I-STAB), (I-DIFF, I-STAB'), (I-DIFF', I-STAB')) in dem vorgegebenen Auslösebereich liegen.

10. Verfahren nach Anspruch 8 oder 9,
**dadurch gekennzeichnet, dass** die Messwertpaare modifiziert werden, indem der Stabilisierungswert in Abhängigkeit von der Ähnlichkeit der Stromverläufe verändert wird.

11. Verfahren nach Anspruch 10,
**dadurch gekennzeichnet, dass** der Stabilisierungswert mit abnehmender Ähnlichkeit der Stromverläufe erhöht wird.

12. Verfahren nach Anspruch 11,
**dadurch gekennzeichnet, dass** der Stabilisierungswert um einen vorgegebenen Faktor (K) erhöht wird, wenn die Ähnlichkeit der Stromverläufe ein vorgegebenes Maß unterschreitet.

13. Verfahren nach einem der voranstehenden Ansprüche 8-12, **d
adurch gekennzeichnetz,** dass die Messwertpaare modifiziert werden, indem der Differenzstromwert in Abhängigkeit von der Ähnlichkeit der Stromverläufe verändert wird.

14. Verfahren nach Anspruch 13,

**dadurch gekennzeichnet, dass** der Differenzstromwert mit abnehmender Ähnlichkeit der Stromverläufe reduziert wird.

15. Verfahren nach Anspruch 14,
**dadurch gekennzeichnet, dass** der Differenzstromwert um einen vorgegebenen Faktor (K) reduziert wird, wenn die Ähnlichkeit der Stromverläufe ein vorgegebenes Maß unterschreitet.

16. Verfahren nach einem der voranstehenden Ansprüche,
**dadurch gekennzeichnet, dass** die Stromverläufe im Hinblick auf das Auftreten einer Stromwandlersättigung hin untersucht werden und im Falle einer erkannten Stromwandlersättigung die Auslöseempfindlichkeit gemäß einem für eine Stromwandlersättigung vorgegebenen Maß reduziert wird.

17. Verfahren nach einem der voranstehenden Ansprüche,
**dadurch gekennzeichnet, dass** die Stromverläufe im Hinblick auf das Auftreten eines Einschaltvorganges hin untersucht werden und im Falle eines erkannten Einschaltvorganges die Auslöseempfindlichkeit gemäß einem für einen Einschaltvorgang vorgegebenen Maße reduziert wird.

18. Verfahren nach einem der voranstehenden Ansprüche,
**dadurch gekennzeichnet, dass** die Stromverläufe an zwei unterschiedlichen Messstellen einer Leitung gemessen werden.

19. Verfahren nach einem der voranstehenden Ansprüche 1-17,
**dadurch gekennzeichnet, dass** die Stromverläufe an zwei unterschiedlichen Messstellen eines Transformators (410) gemessen werden.

20. Verfahren nach Anspruch 19,
**dadurch gekennzeichnet, dass** eine der Messstellen auf der Hochspannungsseite (400) des Transformators und die andere Messstelle auf der Niederspannungsseite (420) des Transformators angeordnet wird.

21. Verfahren nach einem der voranstehenden Ansprüche,
**dadurch gekennzeichnet, dass** als Stabilisierungswert ein Summenstromwert gebildet wird.

22. Verfahren nach einem der voranstehenden Ansprüche,
**dadurch gekennzeichnet, dass** zum Erfassen der Ähnlichkeit der Stromverläufe ein neuronales Netz verwendet wird, das derart trainiert ist, dass es zumindest einen vorgegebenen Störeffekt individuell erkennen kann, und dass die Auslöseempfindlichkeit für die Erzeugung des Fehlersignals störeffektindividuell herabgesetzt wird.

23. Differentialschutzeinrichtung (10)

- mit zwei Anschlüssen (20, 30) zum unmittelbaren oder mittelbaren Anschluss an zumindest zwei unterschiedlichen Messstellen (40, 50) einer Komponente (80, 410)
- sowie mit einer Auswerteinrichtung, die dazu geeignet ist, mit an den zumindest zwei unterschiedlichen Messstellen gemessenenen Strommesswerten (I1(t), I2(t)) Differenzstromwerte (I-DIFF) und Stabilisierungswerte (I-STAB) zu bilden und ein Fehlersignal (F) zu erzeugen, wenn ein aus einem der Differenzstromwerte und dem jeweils zugehörigen Stabilisierungswert gebildetes Messwertpaar in einem vorgegebenen Auslösebereich (320) liegt,

**dadurch gekennzeichnet, dass**

- die Auswerteinrichtung geeignet ist, die Ähnlichkeit der Stromverläufe zu prüfen und in Abhängigkeit von dem Maß der Ähnlichkeit (A) eine modifizierte Auslösebereichsprüfung durchzuführen, wobei die Auslösebereichsprüfung derart modifiziert wird, dass die Auslöseempfindlichkeit für die Erzeugung des Fehlersignals mit abnehmender Ähnlichkeit der Stromverläufe reduziert wird.

24. Differentialschutzeinrichtung nach Anspruch 23, **dadurch gekennzeichnet, dass** die Auswerteinrichtung eine Datenverarbeitungsanlage, insbesondere eine Mikroprozessoreinrichtung, umfasst, die derart programmiert ist, dass sie ein Verfahren nach einem der voranstehenden Ansprüche 1-22 durchführen kann.

**Claims**

1.  Differential protection method for producing an error signal (F), in which

    - respective current measurement values (I1(t), I2(t)) are measured at at least two different measurement points (40, 50) on a component (80, 410), and the current measurement values are used to form difference current values (I-DIFF) and stabilization values (I-STAB),
    - and the error signal is produced if it is established in the course of a trigger range check that a measured value pair formed from one of the difference current values and the respective associated stabilization value is in a prescribed trigger range (320, 320'),

    **characterized in that**

    - the similarity of the current profiles is checked and the measure of the similarity (A) is taken as a basis for performing a modified trigger range check,
    - wherein the trigger range check is modified such that the trigger sensitivity for the production of the error signal is reduced as the similarity of the current profiles decreases.

2.  Method according to Claim 1,
    **characterized in that**
    the similarity of the current profiles is ascertained using a neural network.

3.  Method according to Claim 1,
    **characterized in that**
    the similarity of the current profiles is determined quantitatively by respectively capturing, for each measurement point, the respective harmonic component relative to the fundamental component of the fundamental frequency and also using the discrepancy in the harmonic response between the measurement points as a quantitative measure of the similarity of the current profiles.

4.  Method according to Claim 1,
    **characterized in that**
    the similarity of the current profiles is determined by forming the cross-correlation between the two current profiles and calculating a correlation value which is used as a quantitative measure of the similarity of the current profiles.

5.  Method according to one of the preceding claims,
    **characterized in that**
    a modified trigger range check is performed by taking the similarity (A) of the current profiles as a basis for modifying the prescribed trigger range (320) and using the modified trigger range (320') to form the error signal.

6.  Method according to Claim 5,
    **characterized in that**
    the trigger range is modified by altering a trigger characteristic - defining the trigger range - in a trigger graph on the basis of the measure of the similarity (A) of the current profiles.

7.  Method according to Claim 5 or 6,
    **characterized in that**
    the trigger range is modified by taking the similarity of the current profiles from a prescribed group of auxiliary trigger ranges, each of which has an individually associated similarity range, as a basis for selecting the appropriate auxiliary trigger range and also using the latter as a modified trigger range.

8.  Method according to one of the preceding claims,
    **characterized in that**
    the measured value pairs are modified and a check is performed to determine whether the modified measured value pairs ((I-DIFF', I-STAB), (I-DIFF, I-STAB'), (I-DIFF', I-STAB')) are in the modified trigger range.

9.  Method according to one of the preceding Claims 1-4,
    **characterized in that**
    the prescribed trigger range (320) is retained as the measured value pairs are modified and a check is performed to determine whether the modified measured value pairs ((I-DIFF', I-STAB), (I-DIFF, I-STAB'), (I-DIFF', I-STAB')) are in the prescribed trigger range.

10. Method according to Claim 8 or 9,
**characterized in that**
the measured value pairs are modified by altering the stabilization value on the basis of the similarity of the current profiles.

11. Method according to Claim 10,
**characterized in that**
the stabilization value is increased as the similarity of the current profiles decreases.

12. Method according to Claim 11,
**characterized in that**
the stabilization value is increased by a prescribed factor (K) if the similarity of the current profiles is below a prescribed measure.

13. Method according to one of the preceding Claims 8-12,
**characterized in that**
the measured value pairs are modified by altering the difference current value on the basis of the similarity of the current profiles.

14. Method according to Claim 13,
**characterized in that**
the difference current value is reduced as the similarity of the current profiles decreases.

15. Method according to Claim 14,
**characterized in that**
the difference current value is reduced by a prescribed factor (K) if the similarity of the current profiles is below a prescribed measure.

16. Method according to one of the preceding claims,
**characterized in that**
the current profiles are examined for the occurrence of current transformer saturation, and in the event of current transformer saturation being identified the trigger sensitivity is reduced in line with a measure prescribed for current transformer saturation.

17. Method according to one of the preceding claims,
**characterized in that**
the current profiles are examined for the occurrence of a switch-on process, and in the event of a switch-on process being identified the trigger sensitivity is reduced in line with a measure prescribed for a switch-on process.

18. Method according to one of the preceding claims,
**characterized in that**
the current profiles are measured at two different measurement points on a line.

19. Method according to one of the preceding Claims 1-17,
**characterized in that**
the current profiles are measured at two different measurement points on a transformer (410).

20. Method according to Claim 19,
**characterized in that**
one of the measurement points is arranged on the high-voltage side (400) of the transformer and the other measurement point is arranged on the low-voltage side (420) of the transformer.

21. Method according to one of the preceding claims,
**characterized in that**
the stabilization value formed is a summed current value.

**22.** Method according to one of the preceding claims,
**characterized in that**
the similarity of the current profiles is detected using a neural network which is trained such that it is able to individually identify at least one prescribed disturbance effect, and **in that** the trigger sensitivity for producing the error signal is lowered on the basis of individual disturbance effects.

**23.** Differential protection device (10).

- having two connections (20, 30) for direct or indirect connection to at least two different measurement points (40, 50) on a component (80, 410)
- and also having an evaluation device which is suitable for using current measurement values (I1(t), I2(t)) measured at the at least two different measurement points to form difference current values (I-DIFF) and stabilization values (I-STAB) and to produce an error signal (F) if a measured value pair formed from one of the difference current values and the respective associated stabilization value is in a prescribed trigger range (320),
**characterized in that**
- the evaluation device is suitable for checking the similarity of the current profiles and taking the measure of the similarly (A) as a basis for performing a modified trigger range check, wherein the trigger range check is modified such that the trigger sensitivity for the production of the error signal is reduced as the similarity of the current profiles decreases.

**24.** Differential protection device according to Claim 23,
**characterized in that**
the evaluation device comprises a data processing installation, particularly a microprocessor device, which is programmed such that it is able to perform a method according to one of the preceding Claims 1-22.

**Revendications**

**1.** Procédé de protection différentielle pour la production d'un signal ( F ) d'erreur, dans lequel

- on mesure respectivement deux valeurs ( I1 ( t ), I2 ( t ) ) de mesure de courant en au moins deux points ( 40, 50 ) de mesure différentes d'un composant ( 80, 410 ) et on forme des valeurs ( I-DIFF ) de courant différentiel et des valeurs ( I-STAB ) de stabilisation avec les valeurs de mesure du courant,
- et on produit le signal d'erreur si l'on constate, dans le cadre d'un contrôle de plage de déclenchement, qu'une paire de valeurs de mesure formée de l'une des valeurs de courant différentiel et de la valeur de stabilisation associée respectivement se trouve dans une plage ( 320, 320' ) de déclenchement prescrite,

**caractérisé en ce que**

- on contrôle la similitude des courbes de courant et, en fonction de la valeur de la similitude ( A ), on effectue une modification du contrôle de la plage de déclenchement,
- dans lequel on modifie le contrôle de la plage de déclenchement de manière à réduire la sensibilité au déclenchement pour la production du signal d'erreur en fonction de la diminution de la similitude des courbes de courant.

**2.** Procédé suivant la revendication 1, **caractérisé en ce qu'**on détermine la similitude des courbes de courant au moyen d'un réseau neuronal.

**3.** Procédé suivant la revendication 1, **caractérisé en ce que** l'on détermine quantitativement la similitude des courbes de courant en détectant respectivement pour chaque point de mesure respectivement la proportion d'harmoniques par rapport à la proportion d'oscillation fondamentale de la fréquence de base et on continue à utiliser l'écart du comportement d'harmonique entre les points de mesure comme valeur quantitative de la similitude des courbes de courant.

**4.** Procédé suivant la revendications 1, **caractérisé en ce que** l'on détermine la similitude des courbes de courant en formant la corrélation croisée entre les deux courbes de courant et en calculant une valeur de corrélation que l'on utilise comme valeur quantitative de la similitude des courbes de courant.

**5.** Procédé suivant l'une des revendications précédentes, **caractérisé en ce que** l'on effectue une modification du contrôle de la plage de déclenchement en modifiant la plage ( 320 ) de déclenchement prescrite en fonction de la similitude ( A ) des courbes de courant et en utilisant la plage ( 320' ) de déclenchement modifiée pour la formation du signal d'erreur.

**6.** Procédé suivant la revendication 5, **caractérisé en ce que** l'on modifie la plage de déclenchement en modifiant une caractéristique de déclenchement définissant la plage de déclenchement d'un diagramme de déclenchement en fonction de la mesure de la similitude ( A ) des courbes du courant.

**7.** Procédé suivant la revendication 5 ou 6, **caractérisé en ce que** l'on modifie la plage de déclenchement en choisissant la plage de déclenchement auxiliaire adaptée en fonction de la similitude des courbes de courant parmi un groupe prescrit de plages de déclenchement auxiliaire, auxquelles un intervalle de similitude respectif est associé individuellement et on continue à utiliser cette plage de déclenchement auxiliaire comme plage de déclenchement modifié.

**8.** Procédé suivant l'une des revendications précédentes, **caractérisé en ce que** l'on modifie les paires de valeurs de mesure et on contrôle si les paires ( ( I-DIFF', I-STAB ), ( I-DIFF, I-STAB' ) ( I-DIFF', I-STAB' ) ) de valeurs de mesure modifiées se trouvent dans la plage de déclenchement modifié.

**9.** Procédé suivant l'une des revendications précédentes 1 à 4, **caractérisé en ce que**, en conservant la plage ( 320 ) de déclenchement prescrite, on modifie les paires de valeurs de mesure et on contrôle si les paires ( ( I-DIFF', I-STAB ), ( I-DIFF, I-STAB' ) ( I-DIFF', I-STAB' ) ) de valeurs de mesures modifiées se trouvent dans la plage de déclenchement prescrite.

**10.** Procédé suivant la revendication 8 ou 9, **caractérisé en ce que** l'on modifie les paires de valeurs de mesure en modifiant la valeur de stabilisation en fonction de la similitude des courbes de courant.

**11.** Procédé suivant la revendication 10, **caractérisé en ce que** l'on augmente la valeur de stabilisation au fur et à mesure que diminue la similitude des courbes de courant.

**12.** Procédé suivant la revendication 13, **caractérisé en ce que** l'on augmente la valeur de stabilisation d'un facteur ( K ) prescrit si la similitude des courbes de courant devient inférieure à une valeur prescrite.

**13.** Procédé suivant l'une des revendications précédentes 8 à 12, **caractérisé en ce que** l'on modifie les paires de valeurs de mesure en modifiant la valeur du courant différentiel en fonction de la similitude des courbes de courant.

**14.** Procédé suivant la revendication 13, **caractérisé en ce que** l'on réduit la valeur du courant différentiel au fur et à mesure que diminue la similitude des courbes de courant.

**15.** Procédé suivant la revendication 14, **caractérisé en ce que** l'on réduit la valeur de courant différentiel d'un facteur ( K ) prescrit si la similitude des courbes de courant devient inférieur à une valeur prescrite.

**16.** Procédé suivant l'une des revendications précédentes, **caractérisé en ce que** l'on analyse les courbes de courant au regard de l'apparition d'une saturation d'un transformateur de courant et, dans le cas d'une détection d'une saturation d'un transformateur de courant, on réduit la sensibilité de déclenchement suivant une valeur prescrite pour une saturation d'un transformateur de courant.

**17.** Procédé suivant l'une des revendications précédentes, **caractérisé en ce que** l'on analyse les courbes de courant au regard de l'apparition d'un effet électrique transitoire et, dans le cas de la détection d'un effet électrique transitoire, on réduit la sensibilité de déclenchement suivant une valeur prescrite pour un effet électrique transitoire.

**18.** Procédé suivant l'une des revendications précédentes, **caractérisé en ce que** l'on mesure les courbes de courant en deux points de mesure différents d'une ligne.

**19.** Procédé suivant l'une des revendications précédentes 1 à 17, **caractérisé en ce que** l'on mesure les courbes de courant en deux points de mesure différents d'un transformateur ( 410 ).

**20.** Procédé suivant la revendication 19, **caractérisé en ce que** l'un des points de mesure est disposé du côté ( 410 ) de la haute tension du transformateur et l'autre point de mesure du côté ( 420 ) de la basse tension du transformateur.

**21.** Procédé suivant l'une des revendications précédentes, **caractérisé en ce que** l'on forme une valeur somme de courant comme courant de stabilisation.

**22.** Procédé suivant l'une des revendications précédentes, **caractérisé en ce que** l'on utilise, pour la détection de la similitude des courbes de courant, un réseau neuronal qui est entraîné de manière à pouvoir détecter individuellement au moins un effet perturbateur prescrit et **en ce que** l'on abaisse, individuellement par effet perturbateur, la sensibilité de déclenchement pour la production du signal d'erreur.

**23.** Dispositif ( 10 ) de protection différentielle,

- comprenant deux bornes ( 20, 30 ) de raccordement direct ou indirect à au moins deux points ( 40, 50 ) de mesure différents d'un composant ( 80, 410 ),
- ainsi que comprenant un dispositif d'exploitation qui est propre à produire des valeurs ( I-DIFF ) de courant différentiel et des valeurs ( I-STAB ) de stabilisation avec des valeurs ( I1 ( t ), I2 ( ( t ) ) de mesure de courant mesurées en les au moins deux points de mesures différents et à produire un signal ( F ) d'erreur si une paire de valeurs de mesures formée de l'une des valeurs de courant différentiel et de la valeur de stabilisation associée respectivement se trouve dans une plage ( 320 ) de déclenchement prescrite,

**caractérisé en ce que**

- le dispositif d'exploitation est propre à contrôler la similitude des courbes de courant et à effectuer une modification du contrôle de la plage de déclenchement en fonction de la mesure de la similitude ( A ), le contrôle de la plage de déclenchement étant modifié de manière à réduire la sensibilité de déclenchement pour la production du signal d'erreur au fur et à mesure que diminue la similitude des courbes de courant.

**24.** Dispositif de protection différentiel suivant la revendication 23, **caractérisé en ce que** le dispositif d'exploitation comprend un système de traitement de données, notamment un dispositif de microprocesseur, qui est programmé de manière à pouvoir effectuer un procédé suivant l'une des revendications précédentes 1 à 22.

Fig. 1

EP 2 057 726 B1

Fig. 2

Fig.3

Fig.4

Fig. 5

FIG 6

I1(t), I2(t) → [200: I-DIFF / I-STAB] → I-DIFF, I-STAB → [210: Korrektur I-DIFF] → I-DIFF', I-STAB → [230] → F

[220] → K

10

FIG 7

I-DIFF

300

320

310

330

(I-DIFF, I-STAB)

M1

M1'

(I-DIFF', I-STAB)

M0

I-STAB

# FIG 8

FIG 9

Fig. 10

EP 2 057 726 B1

I2(t)

I1(t)

Fig. 11

FIG 12

I1(t), I2(t)

200

I-DIFF
I-STAB

10

I-DIFF, I-STAB

230

Ḟ

220

K

Fig. 13

FIG 14

I1(t), I2(t) → [200: I-DIFF / I-STAB] — I-DIFF(t) / I-STAB(t) → [220] — K → [210: Korrektur] → [230] → F

FIG 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5808844 A

**In der Beschreibung aufgeführte Nicht-Patentliteratur**

- **D. E. RUMELHART ; J. L. MC CLELLAND.** Parallel Distributed Processing I+II. MIT Press, 1986